# EUROPEAN PATENT APPLICATION

(11) **EP 4 756 751 A1**
(43) Date of publication of application: **10.06.2026**
(21) Application number: 24218209.5
(22) Date of filing: 06.12.2024
(51) Int. Cl.: G07C 9/00, B60R 25/24, H04L 9/40

(54) **APPARATUS AND METHOD FOR INTERACTING WITH A VEHICLE**

(71) Applicant: Bayerische Motoren Werke Aktiengesellschaft, 80809 München (DE)
(72) Inventor: Hippler, Marco, 81541 München (DE); Fink, Matthias, 81541 München (DE)

(57) **Abstract**

The present document describes an apparatus (140, 101, 110, 160) for enabling the control of one or more vehicle functions (103) of a vehicle (100) using a key entity (110, 160) which comprises a digital key (161). The apparatus (140, 101, 110, 160) is configured to associate the vehicle (100) with a group identifier for a group of different vehicles (100) that the vehicle (100) is part of. Furthermore, the apparatus (140, 101, 110, 160) is configured to handle a key attestation (162) of the digital key (161), wherein the key attestation (162) is indicative of the group identifier, and to enable authentication of the key entity (110, 160) at the vehicle (100) using the key attestation (162).

## Description

The present document is directed at interacting with a vehicle, e.g., for controlling a function of the vehicle, using a key entity, such as a key card. In particular, the present document is directed at enabling an efficient and reliable interaction with a group of vehicles using a single key entity, e.g. a single key card.

A vehicle may comprise a communication unit which allows a user to control one or more functions of the vehicle using a portable device, such as a smartphone or a smart watch. Example functions which may be controlled using the portable device are unlocking and/or locking of a door of the vehicle and/or starting the engine of the vehicle. The portable device typically comprises a digital key for authentication of the portal device at the vehicle. Such a portable device may be referred to as a digital key device. The digital key may be a CCC (Car Connectivity Consortium) digital key. As an alternative to a portal device, a key card with a digital key may be used for controlling one or more functions of a vehicle. In general, a digital key entity (such as a portable device or a key card or an electronic key fob) may be used for controlling one or more functions of a vehicle.

The present document is directed at the technical problem of enabling a digital key entity to control one or more vehicle functions of different vehicles in an efficient, comfortable and secure manner.

The technical problem is solved by each one of the independent claims. Preferred examples are specified in the dependent claims.

According to an aspect, an apparatus for enabling the control of one or more vehicle functions of a vehicle using a key entity which comprises a digital key is described. The digital key may be a digital key according to the CCC specification (release 3 or higher). The key entity may be a key card or a (portable) electronic device or an electronic key fob. The apparatus may be part of the vehicle, of the key entity or of a vehicle server for the vehicle.

The apparatus is configured to associate the vehicle with a group identifier for a group of different vehicles that the vehicle is part of. The group of vehicles may be a fleet of vehicles (e.g., of a car rental company). Different groups of vehicles may be identified using different group identifiers. All vehicles of a particular group of vehicles may be associated with the same group identifier (of the particular group). The group identifier of a particular group may be assigned by the vehicle server to a vehicle of the particular group, in particular to all the vehicles of the particular group. The key entity may be enabled to control one or more vehicle functions of a vehicle (in particular of all the vehicles) of the particular group of vehicles. This may be achieved by making use of a single group identifier for all the vehicles that are part of the particular group.

Furthermore, the apparatus is configured to handle (notably to generate, to receive and/or to process) the key attestation of the digital key, wherein the key attestation is indicative of the group identifier. In particular, the key attestation of the digital key may comprise the group identifier as data. Furthermore, the key attestation may comprise a digital signature that has been generated over the data which comprises the group identifier (thereby indicating the authenticity of the group identifier). The digital signature may have been generated using the private key of an authority key of an authority for handling digital keys that are enabled for controlling one or more vehicle functions of the vehicles of the group of vehicles.

The authority key may be the tracking key of the key tracking server (KTS) that is configured to track digital keys that are enabled for controlling one or more vehicle functions of the vehicles of the group of vehicles. Alternatively, or in addition, the authority key may be the digital key of a certificate authority (CA) for issuing digital keys that are enabled for controlling one or more vehicle functions of the vehicles of the group of vehicles. The CA may have been set up by the vehicle server.

The apparatus is further configured to enable authentication of the key entity at the vehicle using the key attestation of the digital key (and in particular, using the group identifier that is indicated within the key attestation of the digital key).

By making use of a group identifier for a group of vehicles (which comprises a plurality of different vehicles), a key entity (notably a key card) is enabled to interact with a plurality of different vehicles (from the same group of vehicles) in an efficient, comfortable and secure manner.

As indicated above, the apparatus may be part of the vehicle. The apparatus may be configured to receive the key attestation of the digital key, notably from the key entity and/or from the vehicle server for the vehicle. As a result of this, the apparatus of the vehicle is enabled to authenticate the key entity in an efficient and reliable manner. In particular, the apparatus may be configured to verify the key attestation of the digital key using the public key of the authority key of the authority for handling digital keys that are enabled for controlling one or more vehicle functions of the vehicles of the group of vehicles (e.g., of the key tracking server or of the group CA for the group of vehicles).

The apparatus (of the vehicle) may be configured to, notably subsect to a successful verification of the key attestation, receive a digital signature from the key entity, wherein the digital signature has been generated over data which comprises the group identifier, using the private key (SK) of the digital key of the key entity. The public key (PK) of the digital key of the key entity may have been extracted (by the apparatus) from the key attestation of the digital key. The digital signature of the key entity may be verified using the public key of the digital key, thereby authenticating the key entity at the vehicle, and thereby enabling the key entity to interact with the vehicle (in particular with any vehicle of the group of vehicles) in an efficient and secure manner. The interaction may be used to control one or more vehicle functions of the vehicle.

The apparatus (of the vehicle) may be configured to send a list of different group identifiers for a corresponding set of different groups that the vehicle is part of to the key entity. The vehicle may be part of a plurality of different groups. Each group may be associated with a different group identifier. The different groups may be associated with different sets of vehicle functions that can be controlled. By way of example, a first group may be limited to one or more access functions for accessing the vehicles of the first group. On the other hand, a second group may allow an engine start of the vehicles of the second group.

The apparatus (of the vehicle) may inform the key entity about the different groups that the vehicle is part of, notably in order to find out the group that the key entity is allowed to interact with. The apparatus may be configured to receive the selected group identifier from the list of group identifiers from the key entity. In particular, the key entity may identify the group that the key entity is allowed to interact with. The key entity may then send a message with the group identifier of the identified group to the vehicle. The key entity may then be authenticated at the vehicle in dependence of the selected group identifier. Hence, the vehicle and the key entity may agree upon the group identifier of the group that is to be used for the interaction between the vehicle and the key entity, thereby further increasing the comfort and the reliability of the interaction.

The apparatus (of the vehicle) may be configured to generate a vehicle key (i.e., a key pair), and to send the public key of the vehicle key to the vehicle server for the vehicle. The apparatus may be configured to generate a single vehicle key for a plurality of different group identifiers (which may then be used for all of the different group identifiers), thereby providing an efficient interaction with the vehicle. Alternatively, the apparatus may be configured to generate a different vehicle key for each group identifiers. Hence, a plurality of different vehicle keys may be used for the plurality of different group identifiers (thereby providing a particularly secure interaction with the vehicle).

Furthermore, the apparatus may be configured to receive the key attestation for the vehicle key, wherein the key attestation typically comprises a digital signature, and wherein the digital signature has been generated over data which comprises the group identifier, using e.g., the private key of the digital key of the certificate authority (CA) for issuing digital keys for vehicles that are part of the group of vehicles. As a result of this, a particularly reliable and secure interaction between the key entity and a vehicle from a group of vehicles may be achieved.

It should be noted that alternatively, the vehicle key and the key attestation may have been pre-determined (e.g., within a backend server). The vehicle key and/or the key attestation may then be provided to the apparatus (of the vehicle), and may be stored on a (secure) storage area of the vehicle. This may e.g., be done during manufacturing of the vehicle.

The apparatus (of the vehicle) may be configured to generate a digital signature over data which comprises the group identifier, using the private key of the vehicle key of the vehicle. This digital signature may then be sent to the key entity, thereby enabling the authentication of the vehicle at the key entity. As a result of this, the reliability and the safety of the interaction between the vehicle and the key entity may be further increased.

As indicated above, the apparatus may be part of the key entity. The apparatus (of the key entity) may be configured to generate a digital signature over data which comprises the group identifier, using the private key of the digital key of the key entity. The digital signature may be sent to the vehicle, thereby enabling an efficient and secure authentication of the key entity at the vehicle.

The apparatus (of the key entity) may be configured to receive a list of different group identifiers for a set of different groups that the vehicle is part of. Furthermore, the apparatus may be configured to select one of the group identifiers from the list of group identifiers, that the digital key of the key entity is associated with. The selection may be performed based on the key attestation of the digital key. The selected group identifier may then be sent to the vehicle, in order to cause (a particularly flexible and reliable) authentication of the key entity at the vehicle in dependence of the selected group identifier.

The apparatus (of the key entity) may be configured to receive a digital signature from the vehicle, wherein the digital signature has been generated over data which comprises the group identifier, using the private key of the vehicle key of the vehicle. The digital signature of the vehicle may be verified using the public key of the vehicle key, in order to authenticate the vehicle at the key entity (in a particularly efficient and reliable manner).

The apparatus (of the key entity) may be configured to receive the key attestation of the vehicle key of the vehicle, notably from the vehicle and/or from the vehicle server for the vehicle. The key attestation may be verified using the public key of the authority key of the certificate authority (notably the group CA) for issuing digital keys for vehicles of the group of vehicles. Subject to a successful verification of the key attestation of the vehicle key, the public key of the vehicle key may be extracted from the key attestation, thereby enabling a particularly efficient and secure authentication of the vehicle at the key entity.

As indicated above, the apparatus may be part of the vehicle server for the vehicle. The apparatus may be configured to set up a certificate authority (CA) for issuing digital keys for vehicles of the group of vehicles, thereby enabling a reliable and secure authentication of a vehicle from the group of vehicles at a key entity. Alternatively, or in addition, the apparatus may be configured to set up a certificate authority (CA) for issuing digital keys that are enabled for controlling one or more vehicle functions of the vehicles of the group of vehicles, thereby enabling a reliable and secure authentication of a key entity at a vehicle from the group of vehicles.

The apparatus (of the vehicle server) may be configured to generate a digital signature for the key attestation of the digital key, wherein the digital signature may be generated over data which comprises the group identifier, using the private key of the authority key of the authority (notably the CA) for handling digital keys that are enabled for controlling one or more vehicle functions of the vehicles of the group of vehicles. The digital signature may be included in the key attestation of the digital key. Furthermore, the key attestation of the digital key may be sent to the key entity and/or the vehicle, thereby enabling a reliable and secure authentication of a key entity at a vehicle from the group of vehicles.

The apparatus (of the vehicle server) may be configured to generate a digital signature for the key attestation of the vehicle key of the vehicle, wherein the digital signature may be generated over data which comprises the group identifier, using the private key of the digital key of the certificate authority (CA) for issuing digital keys for vehicles of the group of vehicles. The digital signature may be included in the key attestation of the vehicle key of the vehicle. Furthermore, the key attestation of the vehicle key may be sent to the key entity and/or the vehicle, thereby enabling a particularly efficient and secure authentication of the vehicle at the key entity.

According to a further aspect, a method for enabling the control of one or more vehicle functions of a vehicle using a key entity which comprises a digital key is described. The method comprises associating the vehicle with a group identifier for a group of different vehicles that the vehicle is part of. Furthermore, the method comprises handling a key attestation of the digital key, wherein the key attestation is indicative of the group identifier, and enabling authentication of the key entity at the vehicle using the key attestation.

According to a further aspect, a software program is described. The software program may be adapted for execution on a processor and for performing the method steps of the method outlined in the present document when carried out on the processor.

According to another aspect, a storage medium is described. The storage medium may comprise a software program adapted for execution on a processor and for performing the method steps of the method outlined in the present document when carried out on the processor.

According to a further aspect, a computer program product is described. The computer program may comprise executable instructions for performing the method steps of the method outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
Fig. 1a shows an example system for controlling a vehicle function using a digital key device;
Fig. 1b shows an example digital key device, notably an owner device and/or a sharer device;
Fig. 1c shows an example key card;
Fig. 2 illustrates an example scenario for sharing a digital key with a key card;
Figs. 3a and 3b each show an example process for enabling a digital key entity to interact with a vehicle that is part of a group of vehicles;
Fig. 4 shows another example process for enabling a digital key entity to interact with a vehicle that is part of a group of vehicles; and
Fig. 5 shows a flow chart of an example method for enabling the interaction between a digital key entity and a vehicle.

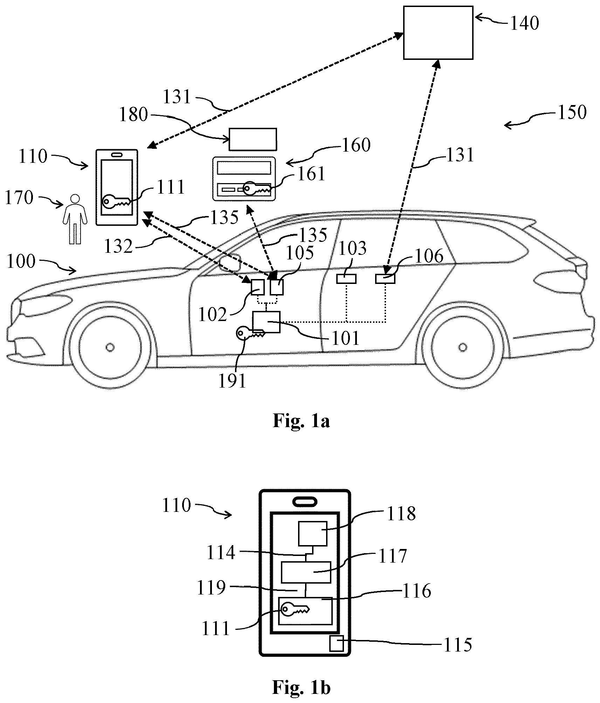

As outlined above, the present document is directed at the technical problem of enabling a digital key entity to control one or more functions of one or more different vehicles in a reliable, flexible and/or secure manner. In this context, Fig. 1a shows an example system 150 which comprises a vehicle 100 and at least one digital key device 110. The digital key device 110 may be a portable electronic device, such as a smartphone, a tablet PC, a wearable smart device (such as a smart watch), etc., wherein a digital key 111 is stored on the portable electronic device, notably on a protected memory section (e.g., a secure element) of the portable electronic device. The device 110 typically comprises an integrated power supply, such as a battery, in order to allow the device 110 to be operated in an autonomous manner.

The digital key device 110 may communicate with a communication unit 102, 105 of the vehicle 100 via one or more different wireless communication links 132, 135. Different communication links 132, 135 may be used for different purposes. In particular, a Bluetooth Low Energy (BLE) communication link 132 may be used to
- determine the distance and/or the relative position between the digital key device 110 and the vehicle 100 (notably based on the signal strength, in particular the RSSI (Received Signal Strength Indicator), of the radio signals which are exchanged between the vehicle 100 and the device 110, and/or based on a channel sounding technique); and/or
- exchange data between the digital key device 110 (e.g., a control command for controlling a vehicle function, such as unlocking a door and/or opening or closing a window and/or activating or deactivating a heating function).

Alternatively, or in addition, a Ultrawideband (UWB) communication link may be used to determine the location of the device 110 relative to the vehicle 100 in a relatively precise manner. The determination of the location of the device 110 using the UWB communication link may be referred to as UWB ranging.

Alternatively, or in addition, a Near Field Communication (NFC) communication link 135 may be used to provide a short-range communication between the device 110 and the vehicle 100. For establishing the NFC communication link 135, the device 110 may be held in close proximity (e.g. in a distance of less than 10cm) from the communication unit 105 of the vehicle 100.

A control unit 101 of the vehicle 100 may be configured to control at least one vehicle function 103 of the vehicle 100 in dependence of the communication between the device 110 and the vehicle 100. In this context, the digital key 111 of the device 110 may be verified, in particular authenticated. Furthermore, subjected to authentication, one or more vehicle functions 103 may be controlled, notably in dependence of
- the distance between the device 110 and the vehicle 100;
- the location of the device 110 relative to the vehicle 100; and/or
- a control command sent by the device 110 to the vehicle 100 via a communication link 112, 135.

In an example system 150, a BLE communication link 112 may be established between the device 110 and the vehicle 100, once the distance between the device 110 and the vehicle 100 is equal to or less than a certain distance threshold. Once the BLE communication link 112 has been established, the device 110 may be authenticated with the vehicle 100 using the digital key 111 of the device 110. Subject to authentication of the device 110, the device 110 may be enabled to send one or more control commands via the communication link 112 for controlling one or more vehicle functions 103.

The system 150 may comprise a vehicle-server 140 which may e.g. be managed by a manufacturer of the vehicle 100. The device 110 and/or a communication unit 106 of the vehicle 100 may be configured to communication with the vehicle-server 140 via a (wireless) communication link 131 (e.g., a 3G, 4G, 5G or higher communication link).

Fig. 1b shows details of an electronic device 110 (i.e., the digital key device). Fig. 1b shows the secure storage area 116, in particular the so-called "secure element", in which the digital key 111 is stored. The secure storage area 116 typically comprises a digital key (DK) applet that is designed to provide one or more functions (e.g., generating a digital signature) with respect to the digital key 111.

The device 110 may comprise an operating system 117 which is configured to interact with the storage area 116, notably with the DK applet of the storage area 116, via a (secure) data interface 119. The operating system 117 may execute a software application 118, e.g. a software application 118 which is configured to interact with the vehicle-server 140. The operating system 117 may be configured to transfer data between the software application 118 and the operating system 117 via a data interface 114. Furthermore, the device 110 may comprise a communication module 115, notably an NFC communication module, for establishing an NFC communication link 135 with the vehicle 100 or with a key card 160.

The user 170 of the device 110 with the digital key 111 may enable another user and/or another electronic device to control one or more vehicle functions 103. For this purpose, the digital key device 110 may cause a shared digital key to be provided to and/or generated on another electronic device, wherein the shared digital key typically determines the scope of the one or more vehicle functions 103 that can be controlled by the other electronic device. The shared digital key is derived from the digital key 111. In particular, the shared digital key may be a subordinate key of the digital key 111 (within a given public key infrastructure, PKI).

The digital key device 110 (which may also be referred to as the sharer device) may send a transfer request to the vehicle server 140 and/or to the other device via the communication link 131, in order to initiate the creation of a shared digital key on the other device. The transfer request may be signed with the digital key 111 of the digital key device 110. Furthermore, the transfer request may specify a set of one or more vehicle functions 103 that can be controlled by the digital key (i.e., the entitlements of the shared digital key).

Hence, the digital key device 110 may provide information (e.g., the entitlements) which is used for creating a shared digital key for, notably on, the other device (which may be referred to as the receiver device). The receiver device may create the shared digital key (which comprises a key pair with a private key and a public key). The public key (PK) of the shared digital key (along with information such as the entitlements) may be sent to the digital key device 110. The digital key device 110 may sign the PK of the shared digital key (along with the information regarding the shared digital key), e.g. using the private key of the digital key 111. This data forms a first part of the attestation of the shared digital key.

The first part of the attestation may be sent to the vehicle server 140. The vehicle server 140 may verify the first part of the attestation (using the PK of the digital key 111) and may optionally create an immobilizer token (which is typically needed for an engine start of the vehicle 100). Furthermore, the vehicle server 140 may sign a data package comprising the first part of the attestation and/or data added by the vehicle server 140 (using the private key of the central digital key of the vehicle server 140), thereby generating the attestation for the shared digital key. This attestation may be sent to and/or compiled by the receiver device (i.e., the other electronic device). Alternatively, or in addition, the attestation may be sent (by the vehicle server 140) to the vehicle 100.

The attestation may be used by the vehicle 100 to check the authenticity of the shared digital key of the other electronic device. For this purpose, the vehicle 100 uses the digital key 111, notably the public key of the digital key 111, of the digital key device 110, from which the sharing process for creating the shared digital key was initiated. The digital key 111, notably the PK of the digital key 111, of the device 110 may be used to determine the one or more properties of the shared digital key (such as the entitlements of the shared digital key). Furthermore, the central digital key, notably the public key (PK) of the central digital key, of the vehicle server 140 may be used to verify the authenticity of the attestation of the shared digital key of the other electronic device. The central digital key may have been used to sign meta information regarding the shared digital key (such as the receipt of the KTS (key tracking server)).

Typically, the shared digital key (along with other metadata) is comprised within the attestation, such that only the attestation is provided to the vehicle 100 and/or to the other electronic device (within respective messages). From this attestation, the shared digital key can be extracted. As indicated above, the integrity of the attestation may be verified using the (public key of) the central digital key of the vehicle server 140 and/or the (public key of the) digital key 111 from which the shared digital key was derived.

It may be desirable to enable the user 170 of the digital key device 110 to share the digital key 111 with a smart and/or key card 160 (referred to herein as key card) which typically only comprises substantially reduced communication and/or processing capability compared with an electronic device, such as a smartphone. In particular, the key card 160 typically does not comprise its own power supply (e.g., battery), such that the key card 160 cannot be operated autonomously. The key card 160 may be configured to receive electrical power for operating the key card 160 via a communication link 135, notably via an NFC communication link. This may be the only power source for operating the key card 160, i.e., the electronic components of the key card 160.

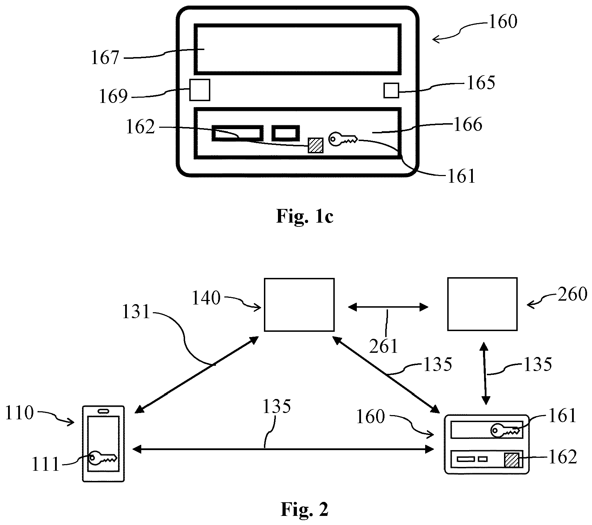

Fig. 1c shows an example key card 160 having a communication module 165, notably an NFC communication module, and a secure storage area 166, notably a secure element, wherein the storage area 166 is configured to store a shared digital key 161 and/or the attestation 162 for the shared digital key 161. Furthermore, the key card 160 may comprise an applet 167 (notably a digital key (DK) applet) which provides a set of commands for interacting with the key card 160, notably with the storage area 166 of the key card 160. The applet 167 may be executed on a processor of the key card 160 (when the key card 160 is provided with electrical energy from an external power supply). In addition, the key card 160 may have a code 169, in particular a machine-readable code such as a QR code, printed on the surface of the key card 160. The code 169 may be indicative of a password which may be used for establishing a secure communication channel with the key card 160.

The digital key device 110, notably the owner and/or sharer device, may interact with a key card 160 via a communication link 135, in particular via an NFC communication link, as illustrated in Fig. 2. Hence, the device 110 may be used as an NFC card reader 180 for the key card 160. The communication link 135 may be used to manage, e.g. to share or create, to terminate and/or to delete, the shared digital key 161 on the key card 160.

The key card 160 is typically provided by a key card provider, wherein the key card provider operates a card server 260. The card server 260 and the key card 160 may interact via a communication link 135, notably via an NFC communication link, e.g. in order to install software on the key card 160, such as the digital key applet 167, and/or in order to provide PKI (public key infrastructure) data to the key card 160. The PKI data of the card server 260 is typically independent from the PKI data used by the vehicle server 140 (for the digital key 111). The PKI data on the key card 160 may comprise a key pair for enabling a secure communication with the key card 160. The card server 260 and the vehicle server 140 may be configured to communicate with one another via a (wireless and/or wireline) communication link 261.

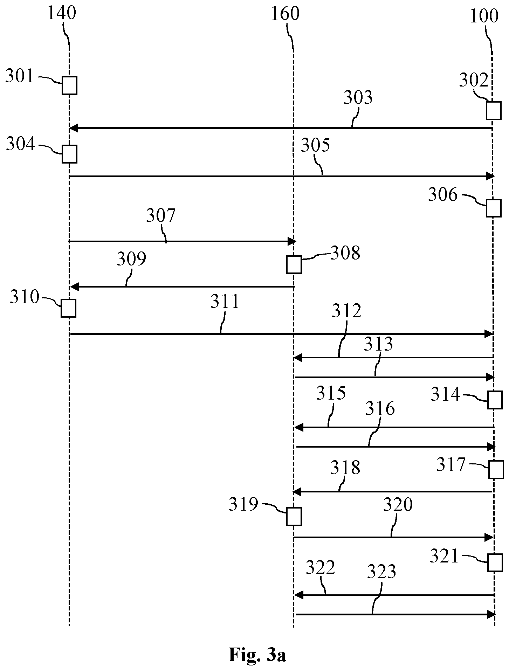

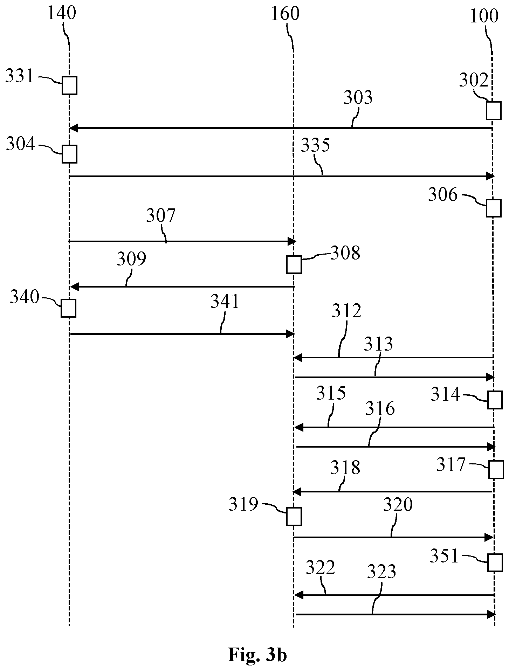

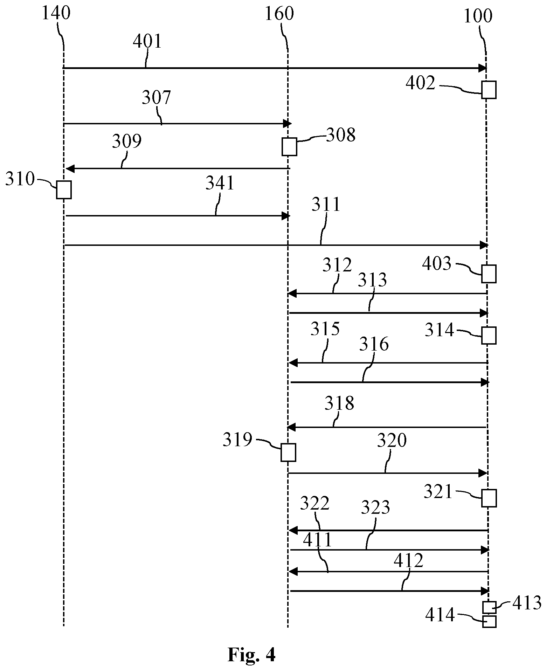

It may be desirable to enable a digital key entity, notably a key card 160, to interact with a group of different vehicles 100. The group of vehicles 100 may e.g. be a fleet of vehicles 100 of a car rental company. It may be desirable to enable a user 170 to access all the vehicles 100 of the group of vehicles 100 by using only a single key card 160. In Figures 3a, 3b and 4 different processes are outlined, which enable a key card 160 to interact with a group of different vehicles 100 in a comfortable, reliable and secure manner. The processes are outlined for a key card 160. It should be noted, however, that the processes are applicable to a digital key entity in general.

The group of vehicles 100 may be associated with a group identifier. In particular, each vehicle 100 within the group may be associated with the same group identifier. The group identifier may be managed by the vehicle server 140. The vehicle server 140 may be configured to manage different group identifiers for different groups of vehicles 100. A group of vehicles 100 may comprise zero or more, one or more, or two or more different vehicles 100.

In the process of Fig. 3a, the vehicle server 140 creates a certificate authority (CA) for a group (notably for a fleet) of vehicles 100 (step 301). In particular a key pair for the group CA may be generated, wherein the key pair comprises a public key (PK) and a private key (SK) of the group CA. The key pair may be a digital key according to the CCC standard.

Furthermore, the vehicle 100 may be configured to create a key pair (according to the CCC standard) with a PK and an SK. (step 302). The key pair may correspond to the digital key of the vehicle 100. The PK of the vehicle key 191 may be provided to the vehicle server 140 (step 303). The vehicle server 140 may be configured to generate a key attestation for the vehicle key 191 (step 304), wherein the key attestation may comprise
- the group identifier of the group that the vehicle 100 belongs to; and/or
- the (possibly compressed) PK of the vehicle key 191.

Furthermore, the attestation may comprise the digital signature over the above-mentioned data, wherein the digital signature is generated using the SK of the group key (i.e., the SK of the digital key of the group CA).

The key attestation may be sent to the vehicle 100 (step 305). Furthermore, the vehicle 100 may store the key attestation (for the vehicle key 191) in a persistent manner (step 306).

In order to enable the key card 160 to interact with a vehicle 100 of the group of vehicles 100, an endpoint may be generated on the key card 160, wherein the endpoint comprises a digital key 161 (with an SK and a PK). For this purpose, the vehicle server 140 may send a create endpoint command to the key card 160 (step 307), wherein the command comprises the group identifier and the PK of the group key, i.e. of the digital key of the group CA). The key card 160 may then create the endpoint (step 308), which involves generating a digital key 161. The PK of the digital key 161 may be provided to the vehicle server 140 (step 309).

The vehicle server 140 may cause the digital key 161 of the key card 160 to be tracked by the key tracking server (KTS). Furthermore, the vehicle server 100 may generate the key attestation for the digital key 161 of the key card 160, wherein the key attestation may be signed using the (tracking or central) key of the KTS (step 310). The key attestation for the digital key 161 of the key card 160 may be provided to the vehicle 100 (step 311), thereby enabling the vehicle 100 to verify the authenticity of the key card 160. The key attestation for the digital key 161 may comprise a digital signature over data which comprises the PK of the digital key 161 of the key card 160 and/or the group identifier, wherein the digital signature is generated using the SK of the tracking key of the KTS.

The key card 160 is now enabled to interact with the vehicle 100, as illustrated by the steps 312 to 321. In the context of the interaction between the key card 160 and the vehicle 100, the key card 160 and the vehicle 100 may first agree on the DK applet that is to be used for the interaction (steps 312, 313). For this purpose, the SELECT command may be used, as specified e.g. in chapter 15 of the CCC specification CCC-TS-101 release 3 or higher. The content of the CCC specification, in particular the content of chapter 15 of the CCC specification, is incorporated herein by reference.

The key card 160 may inform the vehicle 100 (e.g., using the SELECT command) that a digital key 161 is to be used for interaction, which is entitled for interacting with a group of vehicles 100 (that the particular vehicle 100 belongs to). As a result of this, the vehicle 100 may activate a group mode (step 314), within which the group identifier is used to interact with the vehicle 100 (instead of the vehicle identifier of the vehicle 100).

Subsequent to selecting the DK applet (and the corresponding digital key 161) and subsequent to activating the group mode of the vehicle 100, the authentication process may be performed. This may be done using the AUTH0 and AUTH1 commands specified in (chapter 15 of) the above-mentioned CCC specification. The vehicle 100 may send the group identifier to the key card 160 (step 315), e.g., using the AUTH0 command. Furthermore, the ephemeral public key (of an ephemeral key pair) of the vehicle 100 may be provided to the key card 160. In response to this, the key card 160 may provide the ephemeral public key (of an ephemeral key pair) of the key card 160 to the vehicle 100 (step 316). The ephemeral keys may be used to derive a shared secret on both sides (i.e., the vehicle 100 and the key card 160), wherein the shared secret may then be used to generate a shared symmetric key (e.g., using Diffie-Hellman and a pre-determined key derivation function). The shared symmetric key may be used to provide a secure communication channel between the key card 160 and the vehicle 100 (wherein the shared symmetric key may be used to encrypt the messages that are exchanged between the key card 160 and the vehicle 100).

For the actual authentication, the AUTH1 command of the above-mentioned CCC specification may be used. The vehicle 100 may generate (step 317) a digital signature using the private key (SK) of the vehicle key 191 (that had been generated in step 302). The digital signature may be generated across
- the group identifier;
- the transaction identifier (for the particular transaction between the key card 160 and the vehicle 100);
- the ephemeral public key of the vehicle 100; and/or
- the ephemeral public key of the key card 160.

The digital signature of the vehicle 100 may be sent to the key card 160 via the secure communication channel (step 318). The key card 160 may verify the digital signature of the vehicle 100 using the public key of the vehicle key 191 (step 319), wherein the public key of the vehicle key 191 is indicated by the key attestation for the vehicle key 191 (that had been generated in step 304). The key card 160 may verify the authenticity of the key attestation and the vehicle key 191 using the public key of the digital key of the group CA (that had been generated in step 301).

Furthermore, the key card 160 may generate a digital signature using the private key of the digital key 161 (step 319). The digital signature may be generated across
- the group identifier;
- the ephemeral public key of the vehicle 100;
- the ephemeral public key of the key card 160; and/or
- an identifier for the transaction between the vehicle 100 and the key card 160.

The digital signature of the key card 160 may be sent to the vehicle 100 via the secure communication channel (step 320). The vehicle 100 may verify the digital signature of the key card 160 using the public key of the digital key 161 of the key card 160 (step 321).

As a result of this process, the authentication of the vehicle 100 and the key card 160 has been completed. The key card 160 may then be used to control one or more vehicle functions 103 of the vehicle 100. In order to enable a start of the engine of the vehicle 100, the vehicle 100 may request the key card 160 to provide the so-called immobilizer token (step 322). For this purpose, the EXCHANGE command of the above-mentioned CCC specification may be used. The immobilizer token may be stored within the storage area 166 of the key card 160 (e.g., within the mailbox for the digital key 161). The key card 160 may retrieve the immobilizer token from the storage area 166 and may then provide the immobilizer token to the vehicle 100 (step 323), thereby enabling the start of the engine of the vehicle 100.

Hence, a group PKI (notably a group CA) may be used to sign one or more vehicle keys 191 for one or more vehicles 100 of a group of vehicles 100 (notably of a fleet of vehicles 100). The public key (PK) of the signing group CA is known by the key card 160 which allows the key card 160 to verify the validity and/or authenticity of a vehicle 100 from the group of vehicles 100, without the need of knowing each vehicle 100 from the group of vehicles 100, that the key card 160 shall be used for, i.e., without knowing the vehicle identifiers of the individual vehicles 100 from the group of vehicles 100.

In the process shown in Fig. 3a, a vehicle 100 from the group of vehicles 100 is provided with the key attestation of the key card 160, in order to enable the key card 160 to interact with the vehicle 100 (step 305).

In particular, a group CA may be established, wherein the PK of the digital key of this group CA may be provided as root anchor to the key card 160 during the endpoint creation process on the key card 160 (step 307). Furthermore, a s pair (i.e., a vehicle digital key) may be created and the PK of the vehicle digital key may be signed by the group CA (using the SK of the digital key of the group CA).

In addition, a group identifier may be provided, and a digital signature over the vehicle public key and the group identifier may be generated, to provide a key attestation for the vehicle key 191.

Furthermore, a key pair 161 for the key card 160 may be created (as part of the digital key endpoint creation) and the PK of the key pair 161 may be stored in the vehicle server 140. The key card 160 may have a key slot identifier (e.g., a unique identifier) for identification. Deployment of the key card 160 to the vehicle 100 may be achieved by sending the PK of the digital key 161 including the KTS signature over the PK of the digital key 161 (after establishing key tracking) to the vehicle 100.

Vehicle access may be achieved via the key card 160. The key card 160 signals in a SELECT response that a group mode can be used. Furthermore, the group identifier may be being exchanged (instead of the vehicle identifier). The AUTH1 command may provide the key attestation of the vehicle key 191 to the key card 160. The key card 160 may use the public key of the digital key of the group CA to verify the digital signature contained therein. If successful, the PK of the vehicle key 191 (which is comprised within the key attestation for the vehicle key 191) can be trusted and used to verify the vehicle signature provided in the AUTH1 command. Instead of performing a lookup on the public key, the key may be identified using a key slot identifier which may be part of the key attestation.

Fig. 3b shows a process for enabling the interaction between a key card 160 and a vehicle 100 (from a group of vehicles 100), which makes use of a group PKI, i.e. a group CA, and a token PKI, i.e. a token CA, for signing purposes, wherein the PK of the digital key of the respective CA is known to the other side, i.e. the PK of the digital key of the group CA is known to the key card 160, and the PK of the digital key of the token CA is known to the vehicle 100. This process may be used in parallel and/or in coexistence with standard transactions between a device 110 and a vehicle 100 (using the vehicle identifier).

The vehicle server 140 generates a digital key (i.e., a key pair) for the group CA, and another digital key (i.e., a key pair) for the token CA (step 331, which corresponds to step 301 in Fig. 3a). The PK of the digital key of the token CA may be provided to the vehicle 100 (step 335, which corresponds to step 305 in Fig. 3a), e.g. along with the key attestation for the vehicle digital key, thereby enabling the vehicle 100 to verify the authenticity of the digital key 161 of the key card 160. In particular, the vehicle server 140 may use the SK of the digital key of the token CA to sign the key attestation of the digital key 161 (step 340, which corresponds to step 310 in Fig. 3 a). The vehicle 100 may then use the PK of the digital key of the token CA to verify the signature of the key attestation of the digital key 161 (step 351, which corresponds to step 321 in Fig. 3a).

A vehicle 100 may be part of several different groups of vehicles 100. Each group of vehicles 100 may be identified by a specific group identifier. A key card 160 may be enabled to interact with the vehicle 100 using one of the group identifiers. The vehicle 100 may be configured to send a list of group identifiers to the key card 160 (e.g., in step 315), wherein the list of group identifiers identifies the different groups of vehicles 100 that the vehicle 100 belongs to. In particular, the list of group identifiers may be sent within the AUTH0 command. The key card 160 may then select the group identifier from the list of group identifiers that the key card 160 is enabled for. The selected group identifier may be sent to the vehicle (e.g., in step 316). In particular, the selected group identifier may be sent within the AUTH0 (response) command to the vehicle 100. The selected group identifier may then be used for the remaining transaction.

The processes shown in Figs. 3a and 3b make use of a group CA for a group of vehicles 100 to enable the key card 160 to verify the authenticity of the vehicle 100. For the control of one or more non-critical vehicle functions 103 (e.g., one or more vehicle functions 103 which are limited to the access to the vehicle 100 and/or which do not involve the engine start of the engine of the vehicle 100), it may not be necessary that the key card 160 verifies the authenticity of the vehicle 100. Fig. 4 shows a process for enabling the interaction between the key card 160 and a vehicle 100 (from a group of vehicles 100), which does not make use of a group CA (i.e., a dedicated PKI for the group of vehicles 100).

The vehicle server 140 may inform the vehicle 100 that it is part of a group of vehicles 100 (step 401). In particular, the vehicle server 140 may send the group identifier of the group, that the vehicle 100 belongs to, to the vehicle 100. The vehicle 100 may store the group identifier in a (persistent) storage area of the vehicle (step 402).

The process involves the creation of an DK endpoint (for a digital key 161) on the key card 160 (steps 307, 308, 309 and 310), as outlined in the context of Fig. 3a. The key attestation for the digital key 161 may be sent to the vehicle 100 (step 311). Furthermore, the key attestation for the digital key 161 may be provided to the key card 160 (step 341). The vehicle 100 may be configured to verify the key attestation for the digital key 161 using the PK of the tracking key of the KTS (step 403). Furthermore, the key attestation for the digital key 161 may be stored in the storage area of the vehicle 100.

The authentication procedure may be initiated, e.g., using the SELECT command of the CCC specification (steps 312, 313). Furthermore, the vehicle 100 may be put into a group mode (within which the group identifier (instead of the vehicle identifier) is used for authentication) (step 314).

Ephemeral public keys may be exchanged (steps 315, 316) to set up a secure communication channel between the key card 160 and the vehicle 100 (wherein the secure communication channel makes use of a shared symmetric key for encryption of the messages which are transmitted over the secure communication channel). The AUTH0 command of the CCC specification may be used for setting up the secure communication channel.

In the context of steps 315, 316, the vehicle 100 may send a list of different group identifiers for a set of different groups that the vehicle 100 belongs to. The key card 160 may verify whether an endpoint that is compatible with one of the group identifiers is available on the key card 160. If a compatible endpoint is identified, the key card 160 may provide the selected group identifier to the vehicle 100 (e.g., within the AUTH0 response).

As indicated above, the process may be such that the key card 160 does not verify the authenticity of the vehicle 100. As a result of this, the vehicle 100 does not provide a digital signature within step 318. On the other hand, the key card 160 generates a digital signature in step 319 (using the SK of the digital key 161 of the key card 160) and provides the digital signature to the vehicle 100 (step 320). The vehicle 100 verifies the digital signature using the PK of the digital key 161 (step 414), wherein the PK of the digital key 161 may be determined from a look-up table in the storage area of the vehicle 100, using the key Slot Identifier of the digital key 161 (step 321).

If the key Slot Identifier (i.e., which is also referred to herein as the key identifier) of the digital key 161 cannot be found, the vehicle 100 may request the key card 160 to provide the key attestation for the digital key 161 (steps 411, 412), e.g., using the EXCHANGE command according to the CCC specification. The key attestation may be verified using the PK of the tacking key of the KTS (step 413), and the PK of the digital key 161 may be extracted from the key attestation.

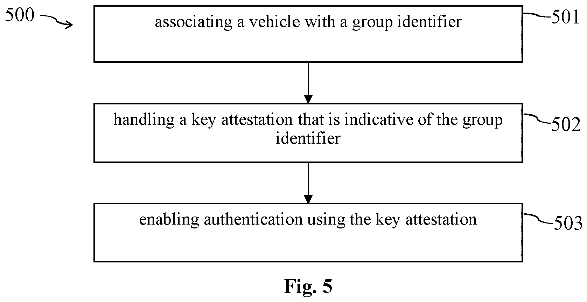

Fig. 5 shows a flow chart of an example (possibly computer-implemented) method 500 for enabling the control of one or more vehicle functions 103 of a vehicle 100 using a key entity 110, 160 (e.g., a device 100 and/or a key card 160 and/or an electronic key fob) which comprises a digital key 161. The method 500 may be executed by the key entity 110, 160, by the vehicle 100 and/or by the vehicle server 140 for the vehicle 100.

The method 500 comprises associating 501 the vehicle 100 with a group identifier for a group of different vehicles 100 that the vehicle 100 is part of. Hence, the vehicle 100 may be identified by a group identifier (possibly in addition to a vehicle identifier for the vehicle 100). The group identifier may be the same for all the vehicles 100 that are part of the group of vehicles 100. The key entity 110, 160, the vehicle 100 and/or the vehicle server 140 may be aware of the group identifier that is associated with the vehicle 100. The group identifier for the vehicle server 100 may be stored (e.g. implicitly, as part of a key attestation) in a storage area of the key entity 110, 160, the vehicle 100 and/or the vehicle server 140.

Furthermore, the method 500 comprises handling 502 the key attestation 162 of the digital key 161, wherein the key attestation 162 is indicative of the group identifier. Handling 502 the key attestation 162 may comprise generating the key attestation 162 (e.g., by the vehicle server 140), receiving and/or analyzing the key attestation 162 (e.g., by the key entity 110, 160 and/or the vehicle 100). In view of the fact that the key attestation 162 is indicative of the group identifier, the digital key 161 may be enabled to control one or more vehicle functions 100 of all the vehicles 100 which are part of the group of vehicles 100.

The method 500 further comprises enabling 503 authentication of the key entity 110, 160 at the vehicle 100 using the key attestation 162. As a result of the authentication process, the key entity 110, 160 may be enabled to control one or more vehicle functions 103 of the vehicle 100.

By making use of a group identifier for all the vehicles 100 which are part of a certain group (e.g. a fleet), a key entity 110, 160 may be enabled to control a vehicle function 103 of all the vehicles 100 of the group in an efficient, secure and reliable manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. An apparatus (140, 101, 110, 160) for enabling the control of one or more vehicle functions (103) of a vehicle (100) using a key entity (110, 160) which comprises a digital key (161); wherein the apparatus (140, 101, 110, 160) is configured to
- associate the vehicle (100) with a group identifier for a group of different vehicles (100) that the vehicle (100) is part of;
- handle a key attestation (162) of the digital key (161); wherein the key attestation (162) is indicative of the group identifier; and
- enable authentication of the key entity (110, 160) at the vehicle (100) using the key attestation (162).

2. The apparatus (140, 101, 110, 160) of claim 1, wherein
- the apparatus (140, 101, 110, 160) is part of the vehicle (100); and
- the apparatus (140, 101, 110, 160) is configured to
- receive the key attestation (162) of the digital key (161), notably from the key entity (110, 160) and/or from a vehicle server (140) for the vehicle (100); and
- verify the key attestation (162) of the digital key (161) using a public key of an authority key of an authority for handling digital keys (111, 161) that are enabled for controlling one or more vehicle functions (103) of the vehicles (100) of the group of vehicles (100).

3. The apparatus (140, 101, 110, 160) of claim 1, wherein
- the authority key is a tracking key of a key tracking server that is configured to track digital keys (111, 161) that are enabled for controlling one or more vehicle functions (103) of the vehicles (100) of the group of vehicles (100); and/or
- the authority key is a digital key of a certificate authority for issuing digital keys (111, 161) that are enabled for controlling one or more vehicle functions (103) of the vehicles (100) of the group of vehicles (100).

4. The apparatus (140, 101, 110, 160) of any of claims 2 to 3, wherein the apparatus (140, 101, 110, 160) is configured to, notably subsect to successful verification of the key attestation (162),
- receive a digital signature from the key entity (110, 160); wherein the digital signature has been generated over data which comprises the group identifier, using a private key of the digital key (161);
- extract a public key of the digital key (161) from the key attestation (162) of the digital key (161); and
- verify the digital signature of the key entity (110, 160) using the public key of the digital key (161), in order to authenticate the key entity (110, 160) at the vehicle (100).

5. The apparatus (140, 101, 110, 160) of any of claims 2 to 4, wherein the apparatus (140, 101, 110, 160) is configured to
- send a list of different group identifiers for a set of different groups that the vehicle (100) is part of to the key entity (110, 160);
- receive a selected group identifier from the list of group identifiers from the key entity (110, 160); and
- authenticate the key entity (110, 160) at the vehicle (100) in dependence of the selected group identifier.

6. The apparatus (140, 101, 110, 160) of any of claims 2 to 5, wherein the apparatus (140, 101, 110, 160) is configured to
- generate a digital signature over data which comprises the group identifier, using a private key of a vehicle key (191) of the vehicle (100);
- send the digital signature to the key entity (110, 160), in order to cause authentication of the vehicle (100) at the key entity (110, 160).

7. The apparatus (140, 101, 110, 160) of any of claims 2 to 6, wherein the apparatus (140, 101, 110, 160) is configured to
- generate a vehicle key (191); and
- send a public key of the vehicle key (191) to a vehicle server (140) for the vehicle (100); and
- receive a key attestation for the vehicle key (191); wherein the key attestation comprises a digital signature; wherein the digital signature has been generated over data which comprises the group identifier, using a private key of a digital key of a certificate authority for issuing digital keys for vehicles (100) that are part of the group of vehicles (100).

8. The apparatus (140, 101, 110, 160) of claim 1, wherein
- the apparatus (140, 101, 110, 160) is part of the key entity (110, 160); and
- the apparatus (140, 101, 110, 160) is configured to
- generate a digital signature over data which comprises the group identifier, using a private key of the digital key (161); and
- send the digital signature to the vehicle (100), in order to cause authentication of the key entity (110, 160) at the vehicle (100).

9. The apparatus (140, 101, 110, 160) of claim 8, wherein the apparatus (140, 101, 110, 160) is configured to
- receive a list of different group identifiers for a set of different groups that the vehicle (100) is part of;
- select one of the group identifiers from the list of group identifiers, that the digital key (161) of the key entity (110, 160) is associated with, notably based on the key attestation (162) of the digital key (161); and
- send the selected group identifier to the vehicle (100), in order to cause authentication of the key entity (110, 160) at the vehicle (100) in dependence of the selected group identifier.

10. The apparatus (140, 101, 110, 160) of any of claims 8 to 9, wherein the apparatus (140, 101, 110, 160) is configured to
- receive a digital signature from the vehicle (100); wherein the digital signature has been generated over data which comprises the group identifier, using a private key of a vehicle key (191) of the vehicle (100); and
- verify the digital signature of the vehicle (100) using a public key of the vehicle key (191), in order to authenticate the vehicle (100) at the key entity (110, 160).

11. The apparatus (140, 101, 110, 160) of any of claims 8 to 10, wherein the apparatus (140, 101, 110, 160) is configured to
- receive a key attestation of a vehicle key (191) of the vehicle (100), notably from the vehicle (100) and/or from a vehicle server (140) for the vehicle (100);
- verify the key attestation using a public key of an authority key of a certificate authority for issuing digital keys for vehicles (100) of the group of vehicles (100); and
- subject to a successful verification of the key attestation of the vehicle key (191), extract a public key of the vehicle key (191) from the key attestation.

12. The apparatus (140, 101, 110, 160) of claim 1, wherein
- the apparatus (140, 101, 110, 160) is part of a vehicle server (140) for the vehicle (100); and
- the apparatus (140, 101, 110, 160) is configured to
- set up a certificate authority for issuing digital keys for vehicles (100) of the group of vehicles (100); and/or
- set up a certificate authority for issuing digital keys (111, 161) that are enabled for controlling one or more vehicle functions (103) of the vehicles (100) of the group of vehicles (100).

13. The apparatus (140, 101, 110, 160) of claim 12, wherein the apparatus (140, 101, 110, 160) is configured to
- generate a digital signature for the key attestation (162) of the digital key (161); wherein the digital signature is generated over data which comprises the group identifier, using a private key of an authority key of an authority for handling digital keys (111, 161) that are enabled for controlling one or more vehicle functions (103) of the vehicles (100) of the group of vehicles (100);
- include the digital signature into the key attestation (162) of the digital key (161); and
- send the key attestation (162) of the digital key (161) to the key entity (110, 160) and/or the vehicle (100).

14. The apparatus (140, 101, 110, 160) of any of claims 12 to 13, wherein the apparatus (140, 101, 110, 160) is configured to
- generate a digital signature for a key attestation of a vehicle key (191) of the vehicle (100); wherein the digital signature is generated over data which comprises the group identifier, using a private key of a digital key of the certificate authority for issuing digital keys for vehicles (100) of the group of vehicles (100);
- include the digital signature into the key attestation of the vehicle key (191) of the vehicle (100); and
- send the key attestation of the vehicle key (191) to the key entity (110, 160) and/or the vehicle (100).

15. A method (500) for enabling the control of one or more vehicle functions (103) of a vehicle (100) using a key entity (110, 160) which comprises a digital key (161); wherein the method (500) comprises
- associating (501) the vehicle (100) with a group identifier for a group of different vehicles (100) that the vehicle (100) is part of;
- handling (502) a key attestation (162) of the digital key (161); wherein the key attestation (162) is indicative of the group identifier; and
- enabling (503) authentication of the key entity (110, 160) at the vehicle (100) using the key attestation (162).
